# EUROPEAN PATENT APPLICATION

(11) **EP 4 578 544 A1**
(43) Date of publication of application: **02.07.2025**
(21) Application number: 23220843.9
(22) Date of filing: 29.12.2023
(51) Int. Cl.: B01J 20/22, B01D 53/02, B01J 20/28, B01J 20/30

(54) **A PROCESS FOR THE PRODUCTION OF AN ADSORBENT BODY**

(71) Applicant: Immaterial Ltd, Cambridge CB4 0FW (GB)
(72) Inventor: BABU, Robin, Cambridge, CB4 0FW (GB); PRASAD, Ram, Cambridge, CB4 0FW (GB); FAIREN-JIMENEZ, David, Cambridge, CB4 0FW (GB)
(74) Representative: Patent Boutique LLP

(57) **Abstract**

The present invention relates to a process for the production of an adsorbent body(ies) comprising a framework and a binder.

## Description

### Field of the invention

The present invention relates to industrially relevant processes for making an adsorbent body, said adsorbent body per se, and uses for said adsorbent body. The adsorbent body comprises metal-organic framework or frameworks and is suitable for use in gas storage and purification systems where high storage capacity is beneficial. The inventive process simplifies the production of high-density adsorbent body(ies) having a high surface area.

### Background of the invention

The present invention provides industrially relevant production of robust adsorbent bodies comprising metal-organic frameworks (MOFs). The term "industrially relevant" refers to processes that may be capable of producing multi-kilo quantities of adsorbent bodies per day using equipment which is cost-effective and readily available. Lab-based making protocols and procedures using e.g., beakers and test tubes making gram quantity samples are typically not industrially relevant.

Metal-organic frameworks (MOFs) are a relatively new class of porous, crystalline materials formed by the reaction of metal ion species with organic ligand molecules by coordination chemistry. MOFs typically have exceptionally high surface areas. The ability to adapt or change the pore sizes and chemistry of the MOF means that many MOFs can be modified to be selective to adsorption of specific species. MOFs are typically made by dilute sol-gel syntheses resulting in fine powders. To be useful in industrial processes these powders typically need to be formed into a larger body(ies) to avoid problems such as compaction and channelling, which may reduce fluid flow and performance. These larger bodies typically need to be mechanically robust and attrition resistant to be industrially useful.

Many industrial processes exist to form fine powders into larger bodies, such as tablets or extrudates, typically by the application of relatively high mechanical pressure or the use of a binder material, or both. However, these processes may very often reduce the sorbent properties of the adsorbent material. The application of high pressures, e.g., as often used in tabletting processes, can destroy the internal pores of the adsorbent material. This is especially relevant for MOFs that have coordination chemistry bonds and are typically less robust. Achieving a high-density MOF adsorbent body using high mechanical pressure may be counterproductive if doing so causes significant collapse of the internal pores of the adsorbent material.

An alternative to tabletting is extrusion of the porous material with a binder. However, the use of a binder can cause other problems and is not straightforward. High levels of particulate binder(s), such as alumina, may impair the performance of the adsorbent body by reducing the amount of adsorbent material in the body. Additionally or alternatively, high levels of binder(s) applied as solutions or liquids will typically block the pores of the adsorbent material and reduce performance. Whereas, the mechanical robustness of adsorbent bodies, such as their resistance to attrition and abrasion, is typically insufficient if very low levels of binder are used.

An ideal adsorbent body may be one that combines high sorbent properties (usually measured by BET area and N₂ adsorption isotherms) and physical robustness, such as resistance to attrition. It may also be industrially preferable if the adsorbent body combines high density with high surface area and good sorbent performance. High density means allow for a lower volume of adsorbent body to be needed for a given process requirement, as compared to a low-density body. This can have very significant industrial advantages such as smaller and lighter (hence cheaper) equipment. These product requirements are typically regarded as being mutually contradictory. High surface area adsorbent bodies are typically associated with lower densities.

Whether or not the internal pores of a MOF in an adsorbent body have been collapsed during processing is typically indicated by the relative density of the resultant MOF body. The relative density is defined as the envelope density of the MOF body divided by the crystal density of the MOF. The crystal density of the MOF is the theoretical density of a single MOF crystal. Crystal densities have been calculated for many MOFs and are available from the Cambridge Structural Database at the Cambridge Crystallographic Data Centre.

Each MOF has a specific crystal density depending on their structure. If the envelope density of an adsorbent body is greater than the crystal density (i.e., the relative density is > 1), then this is likely due to the collapse of internal pores. The greater the relative density is above 1, the more the internal pores will have been collapsed and the lower the sorption capacity. Limiting high relative density is necessary to avoid inefficient internal pore collapse. However, the relative density of an adsorbent body should typically not be much less than 1 as this would be volumetrically inefficient. Very low relative densities typically indicate excessive levels of undesirable larger macro-pores.

Throughout this application, the IUPAC definitions of micropores (diameter of < 2 nm), meso-pores (diameter of 2 nm - 50 nm) and macropores (diameter of > 50 nm) are used.

The envelope density of a body can be measured by dividing the weight of a body (in grams) by its envelope volume (in cm³). The envelope volume is defined in ASTM D3766 as "*the ratio of the mass* of a *particle to the sum of the volumes of the solid in each piece and the voids within each piece, that is, within close-fitting imaginary envelopes completely surrounding each piece".* The envelope density of a body can be measured using techniques based on the Archimedes principle of volume displacement and described later.

The ideal adsorbent body may be one that simultaneously meets what can appear to be contradictory requirements. The ideal adsorbent body should preferably be robust and attrition-resistant. It should preferably have a high surface area to have a good sorption capability. The adsorbent body ideally needs to have a high relative and envelope density to minimise the volume of material required for a given process. These requirements can often seem incompatible.

The adsorbent bodies preferably also need to be simple and environmentally friendly to make. A major factor in whether a process is industrially relevant or not is the amount and nature of solvents used in the synthesis of MOFs. Many of the synthesis routes published in the art are dilute sol-gel processes and use high levels of solvents such as DMF. This is highly problematic on a larger scale. Such solvents can be handled in a lab environment but would be very difficult to handle in the quantities need for large-scale production. A further problem comes from the use of solvents when adding binders. Many binders, such as organic polymers, are much more effective when added as dispersed solutions or dispersions but this introduces additional solvent into the process.

Processes that enable the production of high-performance adsorbent bodies without requiring high levels of solvent are highly advantageous. It is also highly preferable if the solvents are less environmentally harmful or easy to recycle. Water and low chain length (C1 to C4) alcohols are preferred with water being especially preferred.

The inventors have also observed that removal of high levels of solvent from adsorbent bodies during processing can introduce unwanted levels of macro-porosity into the resulting bodies or can result in the bodies cracking or even forming powders. Without wishing to be bound by theory, this is believed to be due to the reduction in volume of the solvated polymeric binders that can happen during drying. This is especially true with polymeric organic binders which are often added as solutions. As they dry, such binders form progressively thicker gels. During the drying, the volume of these gels decreases as solvent evaporates. The reduction in volume of the binder can leave voids in the body, especially if faster drying rates are used, such as at higher temperatures.

### Process Routes for Forming Adsorbent Bodies

For clarity, the term "adsorbent body" or "adsorbent bodies" used herein describes a body or bodies, such as an extrudate, wherein the majority of the body (i.e., > about 70 wt%) comprises one or more MOF. One approach described in the art to prepare adsorbent bodies is to mix MOF powder with a plasticiser/liquid to form a paste/soft solid and then to extrude the material to form an extrudate, followed by removal of the plasticiser/liquid to harden the extrudate. However, such extrudates very often need the presence of a binder material, commonly inorganic particulate binders such as hydrated alumina, to give mechanically robust bodies. The use of pre-dried MOF powder can have some disadvantages such as the introduction of unwanted levels of meso- and macro-porosity. Extrusion is a mechanically simple and widespread process and is an attractive production method.

For an extrusion, or any body-making, process to be industrially relevant, it preferably has to be able to make handleable extrudates/bodies at industrially relevant rates using extant equipment. Most of the published art on the extrusion (or other body formation steps) of MOFs describes work that has been done on a small scale, for example in a laboratory. Mixes of pastes/soft solids or blends containing adsorbent powder plus a plasticiser/lubricant liquid are typically made into single extrudate strands which are allowed to dry and are then cut up. The required physical properties of the mix being extruded or otherwise formed into small bodies to enable industrially relevant processing at scale are not described in the art. However, successful post-extrusion or general post-production handling of the formed small bodies is crucial to any larger-scale production rate.

For extrusion processes, the extruded strands typically need to be broken or cut into smaller lengths ("extrudates") for use in industrially relevant processes. This can be done by mechanical cutting or by relying on the breakage of longer extrudates during extrusion and subsequent handling. Extrudates are often formed by the mechanical cutting of the extrudate strands using a die face-cutter. The extrudates can be cut by a rotating blade moving across the surface of the die-plate. This means that the extrudates can be cut to controlled lengths, which can be controlled by the rotational speed of the cutter tool and design of the die.

For an extrudate-cutting process, or any body-forming process based on cutting, to work, the material preferably should not stick to any blade used to cut the material. If significant amounts of material do stick to the cutting tool, this will rapidly result in the build-up of material on the cutting tool resulting in the production of large masses of material rather than discrete extrudates or bodies.

The bodies, e.g., extrudates or granules formed by cutting, should not stick to each other or equipment sides immediately after cutting or breaking. This is often a major problem with extrusion cutting processes due to the concentration of extrudes in a small space leading to frequent extrudate:extrudate impacts. If the extrudates or bodies are too soft and /or sticky, they can stick to each other after extrudate:extrudate impact or processes which rely on mechanical breakage of the extrudate strands, such as extrusion-spheronisation, just do not work.

The issue of not having deformable material sticking to a cutting blade applies to material in other forms apart from extrudates, such as flakes, slabs, tablets or other larger bodies. Extrudates are a convenient form of body but being able to cut or otherwise break other larger bodies, such as larger "slabs" formed by tray-drying or large flat tablets, into smaller bodies by the use of e.g., a flaker or other cutting tool is also of industrial relevance. The formation of smaller bodies can be followed by further process steps such as rounding in a spheroniser and/or further controlled drying.

Thus, it can be seen that successful, large-scale production of adsorbent bodies by extrusion, or other particle-forming process, requires the mix being processed to have specific physical properties. Any mix cannot be too soft when being cut or broken else it will stick either to itself or to the sides of equipment or to the cutting tools, rapidly leading to the process not being viable. If the mix is too hard, then the high pressures required to extrude the mixture, or otherwise form the bodies, may damage the porosity of the MOF and/or generally make particles too hard to easily spheronise or generate excessive amounts of fines in any milling step.

The use of a binder is typically required to provide sufficient robustness to an adsorbent body comprising MOF. Binders described in the art often comprise inorganic particles - such as hydrated alumina. Such inorganic particulate binders need to be used at relatively high levels (such as 30 wt %) to be effective and rely on particle:particle interlocking to provide robustness. The high levels of such binders inherently dilute the volumetric performance of such adsorbent bodies due to the replacement of framework material by binder. However, such particulate binders do not block the pores of the framework material.

Most of the art describes processes wherein pre-formed and dried MOF powder (often a spray-dried powder) is mixed with a binder and a plasticiser/lubricant and then extruded. The MOF powder can also be optionally milled prior to being mixed with the binder and plasticiser and extruded. Other known processes spray-dry a mixture of MOF powder and inorganic binder and then extrude the spray-dried granules to simplify processing.

The inventors have discovered that optimised organic framework bodies may be formed when the MOF crystallites comprising the adsorbent body are kept dispersed, and preferably of small size, before forming the body. This can be achieved by forming the adsorbent bodies directly from the MOF reaction mix.

Without wishing to be bound by theory, any pre-drying step (such as spray-drying) which forms the MOF crystallites into powders comprising discrete particles or granules is believed to inherently create significant levels of macro and meso-porosity in these larger dried aggregated particles. It is believed that the rapid removal of solvent involved in many drying processes creates larger pores or in-homogeneously hard regions. These MOF powders, even when subjected to a size reduction step, can then introduce unwanted levels of meso and macro-porosity into framework bodies formed from them, thus reducing the volumetric performance of the adsorbent body. High pressures may be used in an extrusion step to partially "squeeze out" at least part of this unwanted porosity but this can then collapse the internal pores of many MOFs.

Instead, it is better if the MOF crystallites are kept in the reaction mix (reaction mass) before being mixed with binder and formed into larger bodies. However, this can make the issue of processing the mixes more challenging if the level of solvent is high. It is especially beneficial for industrially relevant processing for the level of solvent in the reaction to be as low as possible whilst still ensuring high % yields. The inventors have observed that high yields require a certain amount of solvent and that the % yield of the MOF in the reaction mix (reaction mass) can drop significantly with very low levels of solvent, such as less than about 10wt%. Thus it is necessary to optimise the contradictory requirements of minimising solvent level for process simplification and maximising the resulting % yield.

The inventors have discovered that an optimised process can be achieved by forming MOF crystallites in a reaction mass which is partially or mostly based on solid precursors rather than solutions but having enough solvent to obtain high yields, adding binder to the reaction mass and partially drying the resulting mixture before forming it into bodies, followed by further drying and optional further process steps.

In the context of this application, "undried" describes concentrated masses of MOF, binder and solvent which have enough solvent to be deformable under moderate - e.g., manual, pressure but which are solid enough to retain their shape when handled, if formed into a shaped body or plurality of shaped bodies. Typically, undried masses will have less than 60wt% solvent, or less than 50wt% solvent or less than 40wt% solvent or even less than 30wt% solvent. "Wet" refers to masses of MOF, binder and solvent which typically have enough solvent, for example over 60wt% or over 70wt%, to form thick pastes or deformable mixes and which cannot be handled easily as discrete bodies, especially as a plurality of bodies. "Dry" refers to a mass of MOF/binder/solvent which has been sufficiently dried to form hard, robust bodies.

Hence, a wet material can be partially dried to first form an undried material and then dried further to form dry material. For any given MOF-containing mix, the wet mass will have a higher solvent level, for example greater than 10wt% of the total mass, than the undried material, which in turn will have a higher solvent level than the dried material. However, the absolute amounts of solvent in these different stages (wet, undried, dry) may be different for different frameworks and binders. The dry MOF bodies may be subjected to further processing steps such as solvent washing and activation at elevated temperatures to completely remove residual solvent and/or unreacted materials.

The inventors have found that optimised MOF adsorbent bodies can be formed in an industrially relevant process when a wet reaction mass (such as described above) is combined with a binder, partially dried to form an undried MOF mass (undried binder mass), formed into undried adsorbent bodies and then further dried to form dried MOF adsorbent bodies. It may be preferred that the dried extrudates or bodies are then subjected to an additional solvent exchange and washing step. The binder can be in solution, preferably aqueous solution, to improve dispersion, or can be in solid form. Preferably the binder is a partially solvated powder or slurry as this can provide an optimum balance between minimising the additional solvents added and ensuring that the binder is sufficiently solvated to be able to act well as a binder.

### Summary of the invention

The present invention provides, in a first aspect, a process for the production of an adsorbent body, wherein the process comprises the steps of:
(a) forming a wet metal-organic framework (MOF) reaction mass, wherein the wet metal-organic framework reaction mass comprises MOF, unreacted MOF precursors, and reaction solvent;
(b) contacting the wet MOF reaction mass with a binder to form a wet binder mass;
(c) partially drying the wet binder mass to form an undried binder mass;
(d) forming the undried binder mass into an undried adsorbent body;
(e) removing at least some of the remaining solvent from the undried adsorbent body to form a dried adsorbent body;
(f) activating the dried adsorbent body by subjecting the dried adsorbent body to a temperature of greater than about 100 °C to form an adsorbent body.

After forming the undried adsorbent bodies, the undried adsorbent bodies can optionally be washed and dried by contacting the bodies with a washing solvent so as to remove unreacted materials and/or residual reactant solvent. Step (e) is preferably done as an individual low temperature step but can be carried out as part of the higher temperature activation step (f).

The wet MOF reaction mass may be formed by contacting MOF precursors, such as metal salts, buffers, modulators and organic ligands, with reaction solvent, typically such that at least some of the precursors remain in solid form in the reaction mass. This reaction mixture can be reacted for at least about 30 minutes, or at least about 1 hour, or at least about 2 hours, or at least about 3 hours, or at least about 4 hours at a controlled temperature of less than about 100 °C, or less than about 90 °C, or less than about 80 °C, or less than about 70 °C, or less than about 60 °C, or less than about 50 °C. Preferably, the reaction is carried out at about 60 °C. The wet MOF reaction mass may comprise or may consist of MOF crystallites, unreacted MOF precursors (including metal salts, organic ligands, buffers and modulators) and reaction solvent. The reactants may be stirred together and react to have the form of a very thick paste or gel. This process may be applicable to a wide range of different MOFs by varying the reaction temperature, reaction time and level of reaction solvent. The reactant mix is typically sheared or stirred during this period. This can improve the yield of the reaction as well as reduce the MOF particle size. Equipment such as a high-torque Z-blade mixer or helical-screw mixer can be used as the reaction vessel. Typically, the wet reaction mix is in the form of a very thick paste or gel. The wet MOF reaction mass then may be blended with the binder.

For the purpose of clarity, the term "unreacted MOF precursors" is used to describe generally the solids proportion of the MOF reaction mass that is not MOF.

Typically, the undried binder mass is formed into undried adsorbent bodies, such as extrudates of pre-determined length or distribution of lengths. They can then preferably be subjected to a further rounding step. Alternatively, the undried binder mass can be formed by other processes, such as spreading the wet binder mass into a layer or sheet followed by drying to form the undried binder mass and then milling or cutting to form the undried adsorbent body/bodies. The undried adsorbent bodies can then be further dried to form dried adsorbent bodies. Preferably, step (e) is carried out under controlled and limited conditions, such as less than about 80 °C, or less than about 60 °C, or less than about 40 °C, or even at ambient conditions such as about 20 °C, preferably so as to slowly further dry the undried adsorbent bodies.

Slowly drying the undried adsorbent bodies is believed to be important to avoid cracking and fragmentation of the undried adsorbent bodies as solvated binder material dries and shrinks. Reducing the amounts of solvent to be removed, such as by using a wet MOF reaction mass as described herein, helps reduce the scale of this problem since the binder is not as solvated and has less volume to start with. This makes it easier and more industrially practical to make high-density bodies. Higher drying temperatures can be used for low-volatility solvents such as dimethylformamide (DMF) whereas lower drying temperatures are used for more volatile solvents such as water, or ethanol, or methanol, or mixtures thereof. Prior to step (f), the dried adsorbent bodies may optionally be subjected to a washing step with washing solvent to remove unreacted materials to enhance the surface area to give washed adsorbent bodies. Following any solvent washing steps, if used, the dried adsorbent bodies are then activated at high temperature to remove residual solvent and form adsorbent bodies.

In a second aspect, the present invention provides an adsorbent body or bodies made according to the process of the first aspect, preferably wherein the bodies have an envelope density of greater than about 0.3 g/cm³ and less than about 1.5 g/cm³.

In a third aspect, the present invention provides the use of an adsorbent body or bodies produced according to the first aspect or an adsorbent body according to the second aspect for gas storage and/or purification, preferably hydrogen storage and carbon dioxide capture.

### Detailed description of the invention

Throughout this specification, one or more aspects of the invention may be combined with one or more features described in the specification to define distinct embodiments of the invention.

References herein to a singular of a noun encompass the plural of the noun, and vice-versa, unless the context implies otherwise. For example, the term adsorbent body should be understood to also refer to adsorbent bodies, the term a metal-organic framework (MOF) should be understood to also refer to metal-organic frameworks (MOFs).

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps. The term 'comprising' includes within its ambit the term 'consisting' or 'consisting essentially of'.

The term 'consisting' or variants thereof is to be understood to imply the inclusion of a stated element, integer or step, or group of elements, integers or steps, and the exclusion of any other element, integer or step or group of elements, integers or steps.

The term 'consisting essentially of' or variants thereof is to be understood to imply the inclusion of a stated element, integer or step, or group of elements, integers or steps, and that further components may be present, but only those not materially affecting the essential characteristics of the formulation, composition, or compound.

The term 'about' as used herein, when qualifying a number or value, is used to refer to values that lie within ± 5% of the value specified.

### Process for the production of an adsorbent body.

The process preferably comprises the steps of:
(a) forming a wet MOF reaction mass, wherein the wet MOF reaction mass comprises:
   (i) from about 20% to about 70%, or from about 30% to 60%, or from about 40% to about 50%, of MOF by weight of the wet MOF reaction mass;
   (ii) from about 10% to about 70%, preferably from about 10% to about 60%, preferably from about 10% to less than about 50%, reaction solvent by weight of the wet MOF reaction mass; and
   (iii) from about 3% to about 50%, from about 8% to about 40%, from about 10% to about 30% unreacted MOF precursors by weight of the MOF in the wet MOF reaction mass;
(b) contacting the wet MOF reaction mass with a binder to form a wet binder mass;
(c) partially drying the wet binder mass to form an undried binder mass;
(d) forming the undried binder mass into an undried adsorbent body;
(e) removing at least some of the remaining solvent from the undried adsorbent body to form a dried adsorbent body;
(f) optionally contacting the dried adsorbent body with a washing solvent to form a washed adsorbent body and removing at least some of the washing solvent from the washed adsorbent body to form a washed adsorbent body; and
(g) activating the washed or dried adsorbent body by subjecting the dried or washed adsorbent body to a temperature of greater than about 100°C to form an adsorbent body.

It is especially preferred if steps (a) and (b) and optionally (c) can all be carried out in the same reaction vessel.

The inventors have found that adding binder as a solution or slurry may further increase the level of solvent. Such wet binder masses are typically too soft to be easily extruded and/or cut. The wet binder mass typically needs to be subjected to a drying step to form an undried binder mass which is sufficiently solid-like for any extrusion and/or cutting step to be viable.

Typically, the wt% level of solvent in the wet binder mass can be reduced by controlled evaporation or by the addition of low levels (for example up to about 40 wt%) levels of one or more porous fine powders which can adsorb at least some of the solvent. Such powders can include silica, activated carbons, fine, pre-dried organic frameworks, zeolites or combinations thereof. Silica, for example, is able to strongly adsorb many solvents within its pores.

The present invention provides an improved process for the production of high performing adsorbent MOF bodies by a multi-stage drying process wherein a wet framework mass is contacted with a binder, typically an organic polymeric binder, typically in solution/slurry or as a partially solvated powder, to form a wet binder mass. Typically, the wet binder mass then has enough solvent removed to form a more solid-like undried binder mass which can be formed into undried adsorbent bodies and then subjected to at least one further solvent reduction step. Typically, the undried adsorbent bodies can be formed by an extrusion and/or cutting process. The undried or dried adsorbent bodies can undergo a washing step using a washing solvent followed by high temperature drying to form activated adsorbent bodies.

### Step (a) - forming a wet MOF reaction mass.

Step (a) forms a wet MOF reaction mass.

Preferably, step (a) is carried out by contacting together:
(a) metal-organic framework precursor materials, preferably two or more metal-organic framework precursor materials,
(b) reaction solvent,
to form the wet MOF reaction mass. Preferably at least some of the precursor materials are in solid form. Preferably, no further reaction steps are carried out following the contacting together. Preferably, the wet MOF reaction mass is not subject to any washing or concentrating steps. Preferably, the wet MOF reaction mass is not subject to any solvent exchange processes. Preferably, the wet MOF reaction mass is used directly following preparation.

Suitable conditions for this contacting reaction are well within the ambit of the skilled person. For example, this contacting reaction may be carried out at temperatures of less than about 100 °C, for example from about 20 °C to about 100 °C, or from about 50 °C to about 90 °C, for periods of time greater than about 30 mins, or greater than about 1 hour, or greater than about 2 hours, or greater than about 4 hours, or less than about 2 days, or less than about 1 day, or less than about 18 hours, with optional shearing during the reaction period so as to form a wet metal-organic framework reaction mass.

Suitable equipment includes a Sigma or Z-blade type high torque mixer or a helical-screw type mixer. Intense shearing can help the homogeneity of the mix and reduce the resulting particle size. Alternatively, equipment such as the Cyclomixer from Hosokawa Micron could be used.

The conditions of the reaction mixture to form the wet MOF reaction mass, such as type and concentration of solvent, temperature, reaction time etc can be varied such that a very wide range of different MOFs can be formed at high yield. Equipment such as twin-screw extruders are not preferred due to the short residence time which limits the flexibility of the process and range of MOFs that can be made. It is preferred if steps (a) and (b) and preferably (c) can all be carried out in the same reaction vessel.

One option is to mix the different precursors with part of the reaction solvent before adding the separate precursors together with stirring. For example, ZU-301 can be prepared by (i) preparing a dispersion/slurry of zinc carbonate basic in water with heating and agitation and (ii) dissolving oxalic acid and 3-methyl-1,2,4-triazole in a water/ethanol mix and (iii) adding the ligand solution to the zinc carbonate dispersion/slurry with lots of stirring and at elevated temperature for several hours.

Preferably, the metal-organic framework precursor material may be one or more, or a plurality of, metal ions, e.g. metal cations, and one or more, or a plurality of, organic ligands, e.g. multidentate organic ligands.

The metal ions may be selected from the group consisting of: Zn²⁺, Zr²⁺, Cu²⁺, Al³⁺, Mn²⁺, Mg²⁺, Nb²⁺, Fe²⁺, Fe³⁺, Ti²⁺, Ti³⁺, Ti⁴⁺, Co²⁺, Cr²⁺, Nb²⁺, Ni²⁺, Ca²⁺ and mixtures and combinations thereof. The metal ions may be provided by the salt of the metal ion, such as ZrCl₄.

For example, the metal-organic framework is a Zr-containing metal-organic framework and the metal-organic framework precursor materials comprise a Zr metal salt that has been pre-reacted to form Zr₆ oxo-metal clusters

A multidentate organic ligand is an organic ligand capable of donating two or more pairs of electrons in a complexation reaction to form two or more coordinate bonds. The one or more, or plurality of, organic ligands may comprise two or more oxygen and/or nitrogen atoms suitable for donating a pair of electrons to form the two or more coordinate bonds. Preferably, the oxygen atoms may be present as carboxylate or nitro groups. Preferably, the nitrogen atoms may be present as amine groups. Typically, the plurality of organic ligands may be an aromatic carboxylate, an aromatic amine and/or an aromatic nitro.

Typically, the MOF formed in step (a) comprises or is in the form of MOF crystallites. Preferably, the crystallites have a small primary particle size, preferably having a mean particle size of from about 5 nm to about 900 nm, or from about 10 nm to about 800 nm, or from about 12 nm to about 700 nm, or from about 15 nm to about 500 nm, or from about 20 nm and 400 nm. Preferably, the crystallites may have a mean particle size of from about 30 nm to about 100 nm, or from about 40 nm to about 90 nm, or from about 50 nm to about 80 nm. Small primary particles typically increase particle packing in the adsorbent bodies to give higher body densities. The method of measuring particle size is described in more detail below. The particle size of the MOF is preferably measured in a diluted mix of reaction mass by DLS, but can be measured once the material has been formed into the adsorbent body using small angle X-ray scattering (SAXS). Optical image analysis techniques (microscopic analysis) are also suitable for analysis of crystallites in the solid adsorbent body.

The wet MOF reaction mass may have a solids content of from about 20 wt% to about 75 wt%, or from about 25 wt% to about 60 wt%, or from about 30 wt% to about 50 wt%. Conventional adsorbent body synthesis via a dilute sol-gel may only achieve a solids content of 8 wt% or less, whereas the process of the present invention can achieve high solids content without the need for centrifugation. The reaction mass is kept under reaction conditions for long enough to ensure that the majority of the precursors have reacted.

### Step (b) - forming a wet binder mass.

Step (b) contacts the wet MOF reaction mass with a binder, preferably a polymeric organic binder, to form a wet binder mass.

The binder can be in solution (if soluble in a suitable solvent) or it can be added as a solid (preferably as a fine powder) or as a slurry/dispersion in a suitable solvent. A preferred method is to add the binder as a partially solvated powder. Alternatively the binder may be in the form of a finely dispersed dry powder. The partial pre-solvation of the binder increases the interaction and efficacy of the binder with the wet MOF reaction mass compared to addition as a pure powder whilst limiting the amount of extra solvent required. Adding a soluble organic polymeric binder as a solution can be very effective for the dispersion and subsequent performance of the binder (thus limiting the amount needed) but significantly increases the amount of solvent that subsequently need to be removed. The binder is typically mixed with the wet MOF reaction mass with extended mixing to ensure homogeneity.

The binder, preferably polymeric organic binder, may be partially solvated, preferably by pre-mixing with one or more solvents selected from the group consisting of: water, DMSO, short-chain length alcohols (C1 to C4) including methanol, ethanol and propanol, short-chain (C1 to C4) organic acids including formic acid and acetic acid, glycols and mixtures thereof.

The binder may be added to the wet MOF reaction mass in an amount of from about 0.5% to about 30%, or about 1% to about 25%, or about 5% to about 20% or about 10% to about 15%, by weight of the MOF in the wet MOF reaction mass.

When the binder may be provided as an about 67 wt% binder solution or dispersion, for example 20 g binder added to 30 g solvent. Optionally, the binder may be provided as from about 4wt% to 70wt% binder solution or dispersion, or from about 10wt% to about 50wt% binder solution or dispersion, or from about 30wt% to about 40wt% binder solution or dispersion. Typically, adsorbent body formation processes utilise dilute binder solutions, such as 4wt% binder solution. Using more concentrated binder solutions or dispersions may improve the efficiency of the adsorbent body formation process as a solvent reduction steps can be minimised but can introduce other problems such as mixing.

The binder is contacted with the wet MOF reaction mass at a binder to MOF ratio of about 1:19, or about 1:15, or about 1:12, or about 1:7, or about 1:5, or about 1:4, or about 1:3.

Preferably, step (b) immediately follows step (a).

### Step (c) - forming an undried binder mass.

Step (c) partially dries the wet binder mass to form an undried binder mass. Step (c) removes at least some (but not all) of the reaction solvent from the wet binder mass to form an undried binder mass.

Step (c) can be achieved in several different ways. The wet binder mass can be further dried before cutting. This could be done in, e.g., a wiped film evaporator or heated high-torque mixer and the resulting undried binder mass is then cut and formed into smaller bodies. The wet binder mass could be allowed to dry on flat surfaces to form an undried binder mass followed by being cut in a cutting mill or flaker or other suitable cutting equipment. Such methods are examples of removing (e.g. evaporating) at least some but not all of the reaction solvent from the wet binder mass to form an undried binder mass.

Another option is to add an additional adsorbent solid material that is able to adsorb some of the reaction solvent. Such material can be selected from fine activated carbon or silica or zeolite or even some pre-dried framework material (if levels are not too high) and mixtures thereof. The MOF powder could be the same as that forming the wet binder mass or it could be different. Preferably the additional adsorbent powder is selected from activated carbons, zeolites, metal-organic frameworks, silica and mixtures. The additional adsorbent solid material can even be polymeric organic binder if sufficient quantity it is added in fine powder form. Provided quantities of additional adsorbent solid material added are limited, some limited extra porosity could be acceptable. Such methods are examples of trapping at least some but not all of the reaction solvent from the wet binder mass to form an undried binder mass, i.e. some of the reaction solvent is bound to, for example, an additional adsorbent material.

Suitable silicas for use as the additional adsorbent material are precipitated or fumed silicas, preferably fumed silica. Suitable fumed silica includes the Aerosil range from Evonik. Suitable precipitated silicas include the Sipernat range from Evonik.

Thus, step (c) may be carried out by (i) evaporation of solvent; and/or (ii) addition of an adsorbent material having a lower solvent level than the wet binder mass, to the wet binder mass, wherein the adsorbent material is selected from one or more of silica, zeolite, activated carbon, graphene, metal-organic frameworks or combinations thereof.

Preferably, step (c) is carried out at from about 20 °C to about 80 °C, or from about 40 °C to about 60 °C for at least about one day, or at least about two days, or at least about three days.

Typically, the undried binder mass formed by the reduction in reaction solvent level in step (c) has a viscosity at 10s⁻¹ and 25 °C of from about 3.0 × 10⁵ mPa.s to about 3.0 × 10⁶ mPa.s. For example, the undried binder mass may have a viscosity of > about 4.0 × 10⁵ mPa.s at 10 s⁻¹ and 25 °C before any cutting step. The undried binder mass retains enough solvent as to be deformable under pressure and impact so it can be rounded, eg in a spheroniser. Typically, the viscosity of the undried binder mass is less than about 1.25 × 10⁶ mPa.s at 10 s⁻¹ and 25 °C.

Optionally, steps (b) and (c) may be carried out simultaneously or sequentially.

### Step (d) forming an undried adsorbent body.

Step (d) forms the undried binder mass into an undried adsorbent body. Step (d) may be carried out by an extrusion or injection moulding process, or by a cutting or milled process. Preferably, step (d) extrudes and/or cuts and/or otherwise forms the undried binder mass to form an undried adsorbent body. Optionally, the undried adsorbent body may be subjected to a spheronisation treatment. The undried adsorbent body typically has the same composition as the undried binder mass.

At least some of the reaction solvent may be removed from the undried adsorbent body to form a dried adsorbent body. If done, preferably, this step is done gradually, such as at temperatures of less than about 80 °C or less than about 50 °C or less than about 40 °C or even at ambient temperatures.

Optionally, the dried adsorbent body may be contacted with washing solvent so as to remove unreacted materials and/or reaction byproducts and to form a washed adsorbent body (step d1). This washing step may be carried out once or more than once. The washing solvent may be the same as the reaction solvent or it may be different to the reaction solvent.

### Step (e) forming a dried adsorbent body.

Step (e) removes at least some of the remaining solvent from the undried adsorbent body (optionally washed adsorbent body) to form a dried adsorbent body. Step (e) may be carried out by gradual drying at temperatures of less than about 100 °C or less than about 60 °C or even at ambient temperatures.

### Step (f) activation step.

Step (f) activates the dried adsorbent body by subjecting the unactivated adsorbent body to a temperature of greater than about 100 °C, preferably under vacuum, to form an adsorbent body. Preferably, step (f) immediately follows step (e). Step (e) can optionally be integrated as an initial part of step (f).

Typically, the adsorbent body has an envelope density of greater than about 0.3 g/cm³, or greater than about 0.5 g/cm³, or greater than about 0.7 g/cm³. The adsorbent body may have an envelope density of less than about 1.5 g/cm³, or less than about 1.2 g/cm³, or less than about 1.0 g/cm³.

The adsorbent body may have a BET area of from about 300 m²/g to about 1700 m²/g, or from about 500 m²/g to about 1650 m²/g, or from about 700 m²/g to about 1600 m²/g, or from about 800 m²/g to about 1550 m²/g.

Typically, the adsorbent body may have a mean body size of greater than about 0.25 mm, preferably greater than about 0.4 mm or even larger bodies having a monolithic form. The adsorbent bodies can be incorporated into other forms, such as sheets or membranes.

Typically, the adsorbent body comprises: (i) more than about 75%, or more than about 80%, or more than about 85%, metal-organic framework material by weight of the adsorbent body; and (ii) less than about 20%, or less than about 15%, or less than about 10%, or less than about 5% binder by weight of the adsorbent body.

Optionally, Step (e) and step (f) can happen simultaneously or sequentially, preferably simultaneously.

### Wet MOF reaction mass.

The wet MOF rection mass is formed in step (a) and is a mixture of MOF material, residual unreacted MOF precursors and reaction solvent, plus any reaction by-products. The term "unreacted MOF precursors" is used herein to describe all the solid material in the wet MOF reaction mass that is not MOF. The wet MOF reaction mass comprises: (i) from about 20% to about 70% of a metal-organic framework by weight of the wet metal-organic framework reaction mass; (ii) from about 3% to about 50% unreacted MOF precursors by weight of the MOF in the wet metal-organic framework reaction mass; and (iii) from about 10 % to about 70 % of reaction solvent by weight of the wet metal-organic framework reaction mass.

Preferably, the wet framework mass comprises from about 20% to about 70%, or from about 40% to about 60%, of a metal-organic framework by weight of the wet metal-organic framework reaction mass. Preferably, the wet MOF reaction mass comprises from about 3% to about 50%, from about 10% to about 25%, unreacted MOF precursors by weight of the MOF in the wet MOF reaction mass. Preferably, the wet MOF mass comprises from about 10 % to about 70 %, or from about 20% to about 66%, or from about 30% to about 60%, of reaction solvent by weight of the wet metal-organic framework reaction mass. Preferably, the wet framework mass comprises from about 10 % to about 50 %, or from about 20% to less than about 50%, of reaction solvent by weight of the wet metal-organic framework reaction mass.

Preferably, the wet framework mass comprises: (i) from about 20% to about 70% of a metal-organic framework by weight of the wet metal-organic framework reaction mass; (ii) from about 3% to about 50%, from about 10% to about 25%, unreacted MOF precursors by weight of the MOF in the wet MOF reaction mass; and (iii) from about 10 % to about 50 % of reaction solvent by weight of the wet metal-organic framework reaction mass.

Preferably, the wet framework mass comprises: (i) from about 20% to about 70% of a metal-organic framework by weight of the wet metal-organic framework reaction mass; (ii) from about 3% to about 50% unreacted MOF precursors by weight of the MOF in the wet MOF reaction mass; and (iii) from about 10 % to less than about 50 % of reaction solvent by weight of the wet metal-organic framework reaction mass.

Preferably, the wet framework mass is not subjected to one or more washing and re-concentration steps subsequent to initial formation.

### Metal-Organic Framework

Preferably, the MOF contains metal ions selected from one or more of : Zn²⁺, Zr²⁺, Cu²⁺, Al³⁺, Mn²⁺, Mg²⁺, Nb²⁺, Fe²⁺, Fe³⁺, Ti²⁺, Ti³⁺, Ti⁴⁺, Co²⁺, Cr²⁺, Ni²⁺ and Ca²⁺ and mixtures thereof. Suitable MOFs include, but are not limited to, the MOFs listed or mentioned below.

For the purpose of clarity, references to a MOF include derivatives of that MOF with the same structure, including derivatives of the ligands and changes to the metal ions used as well as combinations and mixtures thereof. For example, a reference to CPO-27/MOF-74 would include CPO-27-Ni, CPO-27-Mg, CPO-27-Mn, CPO-27-Zn and CPO-27-Cu as well as ligand functionalised variations thereof, such as CPO-27-Mg-NH₂, and other variants unless specified otherwise.

Suitable Zr-containing MOFs include UiO-66, UiO-67, UiO-68, NU-1000, PCN-222, MOF-808 and Zr-fumarate.

Suitable Zn-containing MOFs include ZIF-7, ZIF-8, ZIF-67, ZIF-71, ZIF-90. and Zn-containing UTSA-16, CALF-20, and ZU-301;

Suitable Al-containing MOFs include MIL-53, CAU-10, MIL-160(AI), Al-formate, Al-fumarate and AI-soc-MOF-1.

Suitable MOFs of the M(F₆₋ₓ)Lₓfamily include SIFSIX-3-Ni, TIFSIX-3-Ni, NbOFFIVE-1-Ni and SIFSIX-2-Cu-i.

Suitable Cr-based MOFs include MIL-100(Cr), and MIL-101(Cr).

Suitable Cu-based MOFs include HKUST-1 and ROS-17.

Suitable Co-based MOFs include cobalt-based UTSA-16 and derivatives thereof.

Suitable Fe-based MOFs include MIL-100(Fe) and MIL-101(Fe).

Suitable mixed metal MOFs include MOFs based on mixtures of two or more metals selected from Fe, Ti and Zn.

Suitable MOFs can comprise mixed ligand or co-crystallite MOFs wherein the MOF comprises at least two chemically distinct organic ligands bonded to the same metal ion. This feature can help adjust the chemical behaviour of the MOF.

It may be preferred that the two chemically distinct organic ligands are chemical analogues. By chemical analogue, it is meant that the structural aspects of the ligand, specifically the backbone as well as the moieties that are involved in the bonding to metal ions, are the same.

An especially preferred feature is for the chemical distinct organic ligands to be chemical analogues, such that the organic ligands have the same backbone structure but differ from each other due to the functionalisation of the backbone structure. The structural similarity of how the different organic ligand anions bond to the metal ions means that variants of a specific MOF can be formed. If the organic ligands are too dissimilar then the MOF may be amorphous or full of defects.

For example, many MOFs have dicarboxylic acids as their organic ligands. Each carboxylic acid group is involved in bonding to a metal ion. The backbone structure refers to the structure between the two carboxylic acid binding groups. The dimensions of the backbone structure determine the dimensions of the pores formed by the organic ligands connecting with the metal ions. The chemical differences come from functional pendant groups attached to the backbone structure.

Exemplary examples are shown below. In these cases, the backbone structure is (de-protonated) terephthalic acid (A).

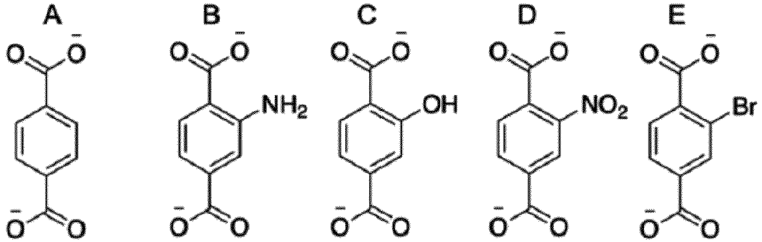

Additional exemplary examples are discussed below. Two exemplary chemical analogues are terephthalic acid (CAS 100-21-0) and 2-aminoterepthalic acid (CAS 10312-55-7). Other exemplary analogues of terephthalic acid include 2-bromoterephthalic acid (CAS 586-35-6), 2-nitroterephthalic acid (CAS 610-29-7), trimellitic acid (CAS 528-44-9), and 2-hydroxyterephthalic acid (CAS 636-94-2).

A further example is the use of blends of 1,2,4-triazole and 3-methyl 1,2,4-triazole with oxalic acid when forming variants of CALF-20. For example, mixes of about 1:3, about 1:1 and about 3:1 of 1,2,4-triazole and 3-methyl 1,2,4-triazole can be used with oxalic acid. Mixtures of 1,2,4-triazole and oxalic acid or 3-methyl 1,2,4-triazole and oxalic acid may be used as ligand.

The use of such chemical analogues allows specific MOFs to be made having variable chemical properties. It may also be preferred that the two chemically distinct organic ligands comprise different backbone structures. The use of organic ligands having different backbone structures can allow for "defects" to be introduced in the monolith body, where the structure of the MOF is incomplete, or allow for more complex MOF structures. These defects can increase porosity in some situations.

Adsorbent bodies comprising mixtures of MOFs can be prepared by mixing different wet MOF reaction mixes together prior to the addition of the binder. Suitable MOF adsorbent bodies can comprise mixtures of MOF crystallites made with different ligands. For example, a suitable UiO-66 MOF adsorbent body can comprise mixtures of UiO-66 BDC and UiO-66 BDC-NH₂.

### Reaction Solvent.

The reaction solvent describes the solvent or solvent mix which is present in the reaction mixture to form wet MOF reaction mass (and in the wet MOF reaction mass) where MOF precursors are contacted together to form the wet MOF reaction mass. The presence of reaction solvent typically increases the yield of the reaction forming the MOF. Preferred reaction solvent include dimethyl sulfoxide (DMSO), polar, aprotic solvents such as dimethylformamide (DMF), dimethylacetamide (DMS) and N-methyl-2-pyrolidone, lower molecular weight (short chain length, C1 to C4) alcohols including ethanol and methanol, glycols, water, C1 - C4 organic acids such as acetic acid and mixtures and combinations thereof. Preferably, the reaction solvent comprises one or more of: water, acetone, DMSO, short-chain length alcohols, glycols and mixtures thereof. Water and ethanol:water blends are especially preferred. Preferably, the reaction solvent comprises more than 50 wt% water.

### Binder.

The binder can comprise an inorganic binder or an organic polymeric binder. Preferably the binder is an organic polymeric binder.

### Inorganic binders.

may include materials such as silicas including colloidal silica suspensions, alumina including hydrated alumina and aluminosilicates.

### Organic polymeric binder.

The terms "organic polymeric binder" and "polymeric organic binder" are used interchangeably herein. Preferably, the polymeric binder is an organic polymeric binder selected from one or more of the following; polyvinyl alcohol (PVA), polyvinyl acetate, polyvinyl alcohol/acetate copolymers, polyimide, polyamide, polyvinyl pyrrolidone, polyacrylates include polyacrylic acid, polycarboxylates, polyethylene glycols, poly(1,4- phenylene-ether-ether-sulfone) (PFEES), poly(tetrahydrofuran) (PTHF), hydrophobic organic polymers including polyvinylidene fluoride, graphene, graphene oxide, fluorinated graphene, polyvinyl epoxies, polyethylene, polystyrene, polyvinylchloride, polytetrafluorethylene, polydimethylsiloxane, polyesters, and polyurethanes, polylactic acid and derivatives thereof and combinations thereof. The polymeric binder can comprise biopolymer-based materials such as polysaccharide gums including xantham gum, guar gum, alginates, chitosan, cellulose-based polymers such as cellulose, cellulose acetate, hydroxypropyl methyl cellulose (HPMC), methyl cellulose, ethyl cellulose, hydroxyethyl cellulose, hydroxypropyl methylcellulose phthalate (HPMCP), or any mixtures and combinations thereof. A particularly preferred binder mix is a blend of a cellulose-based polymer, especially hydroxyethyl cellulose or methyl cellulose, and polyvinyl alcohol.

The Inventors have found that the use of hydrophilic binders, such as PVA and polysaccharides, may improve air stability of the adsorbent bodies.

### Wet binder mass.

The wet binder mass is formed in step (b). Typically, the wet binder mass will comprise from about 20 wt.% solids to about 60 wt% solids content. Typically the wet binder mass will comprise from about 3% to about 20% binder by weight of the theoretical mass of MOF in the wet binder mass.

The wet binder mass may comprise less than about 20%, less than about 15%, or less than about 10%, or less than about 5%, or less than 3% binder by weight of the wet binder mass.

### Undried binder mass.

The undried binder mass is formed in step (c). It may be preferred for the undried binder mass to comprise less than about 75% solvent, or less than about 70% solvent or less than about 60% solvent or even less than about 50% solvent. For any given adsorbent framework, the undried binder mass contains less solvent than the wet binder mass.

The undried binder mass may comprise less than about 20%, or less than about 15%, or less than about 10%, or less than about 5%, binder by weight of the undried binder mass.

Typically, it is important to control the rheology of the undried binder mass. The rheology of the undried binder mass is a complex combination of factors such as framework particle (MOF crystallite) size, amount of reaction solvent present, amount of unreacted MOF precursors remaining, nature of the binder, and presence of other materials. Typically, it is necessary for mixes being cut to be sufficiently "solid-like" if they are to be successfully cut without smearing. One measure of how "solid-like" a material is its viscosity. Typically, it is therefore important for the viscosity of the undried binder mass to be within certain limits.

Thus, the undried binder mass in preferred methods of the present invention, typically has a viscosity at 10 s⁻¹ and 25 °C of greater than about 3.0 × 10⁵ mPa.s or greater than about 4.0 × 10⁵ mPa.s or greater than about 5.0 × 10⁵ mPa.s or greater than about 6.0 × 10⁵ mPa.s or greater than about 7.0 × 10⁵ mPa.s or even greater than about 1.0 mPa.s × 10⁶ mPa.s. The preferred viscosity may be chosen based on the nature and design of the cutting and subsequent processing steps. In preferred methods of the present invention, the undried binder mass typically has a viscosity at 10 s⁻¹ and 25 °C of less than about 3.0 × 10⁶ mPa.s or less than about 2.0 × 10⁶ mPa.s or less than about 1.25 × 10⁶ mPa.s.

### Undried adsorbent body.

The undried adsorbent body is formed in step (d). This may be formed by extrusion and/or cutting or other forming processes including injection molding. The undried adsorbent body may comprise less than about 50wt% solvent.

### Dried adsorbent body.

The dried adsorbent body is formed in step (e).

### Washing solvent.

The washing solvent may be selected from one or more of the following: water, acetone, DMSO, short-chain length alcohols (C1 to C4), glycols and mixtures thereof. Preferred washing solvents include water and lower molecular weight alcohols (short-chain length alcohols, C1 to C4) including ethanol and methanol, or combinations thereof. The washing solvent can comprise a mix of solvents. More than one washing solvent could be used in the washing step. Typically, the washing solvent is not the same as the reaction solvent.

### Washed adsorbent body.

The washed adsorbent body may be optionally formed in the optional step in which the dried adsorbent body may be contacted with washing solvent to form a washed adsorbent body.

### Unactivated adsorbent body.

The unactivated adsorbent body may describe the dried adsorbent body prior to activation step (f).

### Adsorbent body.

The adsorbent body comprises metal-organic framework material and binder, preferably organic polymeric binder. Typically, the adsorbent body has an envelope density of greater than about 0.3 g/cm³, or greater than about 0.7 g/cm³. The adsorbent body may have an envelope density of less than about 1.5 g/cm³, or less than about 1.2 g/cm³, or less than about 1.0 g/cm³.

The adsorbent body may have a BET area of from about 300 m²/g to about 1800 m²/g, or from about 500 m²/g to about 1700 m²/g, or from about 600 m²/g to about 1600 m²/g, or from about 700 m²/g to about 1500 m²/g.

Typically, the adsorbent body may have a mean particle diameter of greater than about 0.25 mm, preferably greater than about 0.4 mm.

Typically, the adsorbent body comprises: (i) more than about 75%, or more than about 80%, or more than about 85%, metal-organic framework material by weight of the adsorbent body; and (ii) less than about 20%, or less than about 15%, or less than about 10%, binder by weight of the adsorbent body.

Each and every reference referred to herein is hereby incorporated by reference in its entirety, as if the entire content of each reference was set forth herein in its entirety.

While particular examples and/or embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

### Methods

### Method of measuring viscosity.

Suitable equipment for measuring the viscosity of undried binder mass is an Anton Paar MCR 92 Rheometer with a 25 mm diameter plate, a 25 degree angle cone with a gap of 3.0 mm and measured at 25 °C. A sample of ~ 2g is placed on the plate, the upper cone lowered to the target gap distance, excess sample removed from the sides and the rotational viscosity measured. Typically the viscosity is measured over a range up to a shear rate of 50 s⁻¹. For the purpose of this document, the viscosity of a material is the viscosity measured at 10 s⁻¹ and 25 °C.

### Measurement of crystallite sizes by microscopic analysis.

A preferred way to measure the dimensions of the MOF crystallites especially after formation into a larger MOF body, is to use microscopic examination using SEM or TEM equipment. Suitable TEM equipment includes the JEOL JEM 2100. Suitable SEM equipment includes the FEI Quanta 3D.

Typically, the particle size distribution of the MOF crystallites comprising the MOF body is measured by breaking the MOF body into smaller fragments to expose internal surfaces, sieving the fragments to between 500 microns and 250 microns, and mounting the fragments onto the microscope stub. The MOF crystallites making up the MOF body retain discernible individual dimensions, and these can be seen forming the various exposed surfaces. The diameter of a crystallite of MOF can be measured by visual examination by drawing the longest possible line between diametrically opposing internal surfaces. Alternatively and preferably, software such as imaged can be used. Typically, at least 50 observations of separate particles will need to be made to give statistically valid results for the particle size distribution. Typically, multiple (e.g., at least five) different surfaces need to be examined from at least ten randomly selected particles within the field of view of each surface. Statistical analysis can then be used determine the mean particle size and other parameters of the size distribution.

### Mean particle size measurement by SAXS.

Alternatively, the mean particle size of the crystallites in the MOF body can also be measured using SAXS if synchrotron equipment is available. If there is any discrepancy between SAXS and optical methods, SAXS values are to be used.

The particle size distribution of the adsorbent particles forming the adsorbent body can be characterised by SAXS measurements of the adsorbent body. In principle, in a SAXS experiment, the light is scattered as a result of the contrast in electron density between two phases. Based on this, one can calculate the size of an equivalent spherical particle, or other shapes. The SAXS intensity at a particular angle depends on the electron density contrast. It also depends on the size of the particles. Large particles scatter at low angles and small particles scatter at larger angles. To generate a measurement, pieces of adsorbent material are mounted on a sample holder. For SAXS, the X-rays are produced by synchrotron radiation. One or more sets of data are collected to cover the whole range in scattering angle. A Kratky instrument can be used to collect small-angle scattering at the larger scattering angles (1.0e-1 to 4.0e0 degrees). A Bonse Hart instrument can be used to collect small-angle scattering at the smaller scattering angles (2.2e-3 to 5e-1 degrees). In this case, the two datasets are combined into a single scan after background subtraction, and the data are subsequently de-smeared. These de-smeared data are then transformed to a volume size distribution function by the regularization technique. The volume distribution function is the final output of this procedure.

### Measurement of particle size of the framework crystallites in the reaction mix.

The particle size distribution of the framework crystallites when in the reaction mix can be measured by Dynamic Light Scattering. Suitable equipment includes the NANO-flex II from Colloid Metrix operated according to manufacturer's instructions. The sample probe can be inserted directly in the reaction mix after the reaction period. Dilution of the reaction mix is required to ensure that the mix being measured has a solids level of 20 - 25wt%.

### Method for measuring the BET area of an adsorbent body.

The BET surface area of an adsorbent body can be measured by use of ASTM method D3663-03 "Standard test method for surface area of catalysts and catalyst carriers". The BET surface area is determined by measuring the volume of nitrogen gas adsorbed at various low-pressure levels by the monolith sample. Pressure differentials caused by introducing the monolith surface area to a fixed volume of nitrogen in the test apparatus are measured and used to calculate BET surface area. Suitable equipment for measuring BET surface area include the 3Flex from Micromeritics Corporation, used according to the manufacturer's guidelines.

### Determination of the composition of the wet MOF reaction mass of MOF.

1. The amount of MOF in a reaction mass is determined as follows. A measured sample of the wet MOF reaction mass, typically ~1g of mix, is subjected to a series of washing steps followed by drying at 100 °C under vacuum. The sample is dispersed in washing solvent, typically ethanol, methanol or an aqueous mix of these, and then centrifuged at high speed to separate the solid. Suitable conditions are centrifuging for 25min at 5250rpm using the Beckman-Coulter J-15R. The liquid is then decanted and a fresh batch of washing solvent added and the procedure repeated three times. The sample is then dried at 100 °C under vacuum to remove all solvent and the residual mass carefully weighed. The residual mass is the mass of MOF in the wet MOF reaction mass. The % of MOF in the wet reaction mass can be calculated by dividing the mass of residual MOF by the mass of the original wet MOF reaction mass. The mass of MOF can also be used to calculate the % yield from the known quantities of MOF precursors added to form the mix and the mass of MOF that would be formed at 100% yield.
2. Determination of solvent level in a sample. The wt% of solvent in a wet MOF reaction mass is calculated by drying a carefully weighed 1g reaction mass at 100 °C under vacuum until there is no further weight loss, carefully measuring the weight of the residual mass and calculating the % wt loss compared to the original mass of the wet MOF reaction mass. The % wt loss is the wt % of solvent in the sample.
3. The wt % of unreacted MOF precursors can be directly determined by subtracting the % values calculated in (1) and (2) from 100%. This also allows the amount of unreacted MOF precursors as a % of the amount of MOF present to be directly calculated.

### Method for determining the level of organic polymeric binder in a MOF body.

The level of organic polymeric binder in MOF body can be determined by thermogravimetric methods based on weight loss at elevated temperatures. The high temperatures used (600°C) will burn off the organic species leaving metal oxide species etc behind. The difference in % weight loss between a sample of MOF and a sample of MOF plus binder shows the level of binder. The MOF body is crushed and a sample of the MOF body material is heated up to 600 °C and the weight loss when at steady state is measured and normalised. A sample of the MOF itself is then heated under identical conditions and the weight loss normalised. The difference between the % wt losses is the % of binder present in the adsorbent body.

### Examples.

Aspects of the invention will now be demonstrated by reference to the following nonlimiting examples.

Unless otherwise mentioned, room temperature and pressure are 20 °C (293.15 K, 68 °F) and 1 atm (14.696 psi, 101.325 kPa), respectively. All reagents unless otherwise stated were obtained from commercial sources and were used without further purification.

### Bodies of HKUST-1 using different binder:solvent levels.

1.83 g (9.2 mmol) of copper acetate monohydrate and 1.23 g (6.1 mmol) of 1,2,4-benzene tricarboxylic acid were mixed in a glass vial with 1.2 ml of ethanol and 4.87 ml of water. This gave a reaction mix of having a solids content of 37.6 wt% and a solvent level of 62.4 wt%.

The mixture was heated at 60 °C for 2 hours with constant stirring using the stirrer bar. The reaction mixture formed a thick gel.

After finishing the desired reaction, 0.36 g of methylcellulose (MC) binder was added as a powder. The mixture suddenly formed a very thick paste which was stirred well to mix the binder uniformly. The paste was too sticky and soft to be formed into handleable bodies. The paste was then left to dry at 60 °C for three days. After two hours the paste could be formed into non-sticky individual bodies. After the further drying, the solid bodies were very hard and robust. They were then solvent exchanged with ethanol for 4 days, and then dried at room temperature followed by activating by heating to 150 °C under vacuum for 8h.

### HKUST-1 Synthesis and binder addition dissolved/dispersed in different amounts of solvents.

Three batches of 1.83 g (9.2 mmol) of copper acetate monohydrate and 1.23 g (6.1 mmol) of 1,2,4-benzene tricarboxylic acid were mixed in glass vials and 1.2 ml of ethanol and 4.87 ml of water were added to each batch and the mixtures heated at 60 °C for 2 hours with constant stirring using the stirrer bar. The reaction mixtures formed thick gels.

After finishing the desired reaction, 0.36 g of Methylcellulose binder dissolved/dispersed in different amounts of solvents was added to each vial, forming very thick pastes.
a. 0.36g of MC mixed with 0.9ml of ethanol
b. 0.36g of MC mixed with 3.6ml of ethanol
c. 0.36g of MC mixed with 9.0 ml of ethanol

The thick pastes were stirred well to mix the binder uniformly and then left to dry at 60 °C for three days. All of the mixes could be formed into bodies by manual manipulation after drying for 2 to 4 hours. After the rest of the drying, the solid bodies were then solvent exchanged with ethanol for 4 days, and then dried at room temperature. They were then activated by heating to 150 °C under vacuum for 8h.

### MOF-808 synthesis and binder addition.

30 g of Zr₆O₈ zirconium oxo-clusters and 7.5 g of 1,2,4-benzene tricarboxylic acid were mixed in a glass vial with 19.6 ml of water and 17.5 ml of acetic acid. The reaction mixture was stirred well and heated at 90 °C for 18 hours. The gel formed was mixed with 5.58 g of MC pre-dissolved in 140 ml of a 1:1 mix of water/ethanol. The mixture was mixed well and then dried at 60 °C to form into solid bodies by extrusion through a syringe followed by further drying. Dried bodies were solvent exchanged with ethanol for 4 days, dried at 40-50°C, and activated at 150 °C under vacuum for 8 hrs.

### ZU-301 synthesis and binder addition.

Zinc carbonate, basic, (250 mg, 0.45 mmol) was dissolved/dispersed in water (0.47 mL) and heated at 90 °C. Oxalic acid (102.5 mg, 1.14 mmol) and 3-methyl-1,2,4-triazole (189 mg, 2.28 mmol) were dissolved in water/ethanol (0.24/0.24 ml). This solution was then added to the zinc carbonate solution/dispersion with stirring followed by further stirring for 18 h at 60 °C. The gel formed was then mixed with 0.386 g of MC pre-dissolved in 1.93 ml of water. The mixture was mixed well and then partially dried at 40 °C for 4 hours to form an undried mass that could be formed into bodies. These were further dried at 40 °C for 2 days and the dried bodies were solvent exchanged with ethanol for 4 days, dried, and activated under vacuum at 150 °C for 8 hours.

### CALF-20 Synthesis and binder addition.

Zinc carbonate basic (250 mg, 0.45 mmol) was dissolved/dispersed in water (0.47 mL) and heated at 90 °C. Oxalic acid (102.5 mg, 1.14 mmol) and 1,2,4-triazole (157 mg, 2.28 mmol) were dissolved in water/ethanol (0.24/0.24 ml). This solution was then added to the zinc carbonate solution/dispersion with stirring followed by further stirring for 18 h at 60 °C. The gel formed was then mixed with 0.386 g of MC pre-dissolved in 1.93 ml of water. The mixture was mixed well and then partially dried at 40 °C for 4 hours to form an undried mass that could be formed into bodies. These were further dried at 40 °C for 2 days and the dried bodies were solvent exchanged with ethanol for 4 days, dried, and activated under vacuum at 150 °C for 8 hours.

## Claims

1. A process for the production of an adsorbent body, wherein the process comprises the steps of
(a) forming a wet metal-organic framework reaction mass, wherein the wet metal-organic framework reaction mass comprises: (i) from about 20% to about 70% of a metal-organic framework by weight of the wet metal-organic framework reaction mass; (ii) from about 3% to about 50% unreacted MOF precursors by weight of the MOF in the wet MOF reaction mass; (iii) from about 10 % to about 70 % of reaction solvent by weight of the wet metal-organic framework reaction mass;
(b) contacting the wet framework reaction mass with a binder to form a wet binder mass;
(c) partially drying the wet binder mass to form an undried binder mass;
(d) forming the undried binder mass into an undried adsorbent body;
(e) removing at least some of the remaining solvent from the undried adsorbent body to form a dried adsorbent body;
(f) activating the dried adsorbent body by subjecting the dried adsorbent body to a temperature of greater than about 100 °C to form an adsorbent body.

2. A process according to claim 1 wherein the wet metal-organic framework reaction mass comprises from about 30% to about 70% of a metal-organic framework by weight of wet metal-organic framework reaction mass and from about 10 % to about 50 % of reaction solvent by weight of the wet metal-organic framework reaction mass.

3. A process according to claim 1 or claim 2 wherein
(i) after step (d) and before step (e), the process comprises at least one washing step (d1) contacting the undried adsorbent body with a washing solvent so as to remove unreacted materials and/or reaction by-products, and/or
(ii) step (a) is carried out by contacting together metal-organic framework precursor materials at least partially in solid form and reaction solvent at temperatures from about 20 °C to about 100 °C, so as to form a wet metal-organic framework reaction mass, and/or
(iii) step (c) is carried out by (1) evaporation of solvent; and/or (2) addition of an adsorbent material having a lower solvent level than the wet binder mass, to the wet binder mass, wherein the adsorbent material is selected from one or more of silica, zeolite, activated carbon, graphene, metal-organic frameworks or combinations thereof, and/or
(iv) step (e) is carried out at temperatures less than about 150 °C, preferably less than about 100 °C, preferably less than about 60 °C, and/or
(v) step (b) and step (c) are carried out simultaneously, and/or
(vi) the wet metal-organic framework reaction mass is not subject to a solvent exchange process.

4. A process according to any of claims 1 to 3 wherein step (d) is carried out by (i) an extrusion process, (ii) an injection moulding process, (iii) a cutting process, or (iv) a milling process.

5. A process according to any of claims 1 to 4 wherein the binder in step (b) is in the form of (i) a solution, (ii) dispersion, (iii) a partially solvated powder or (iv) a finely dispersed powder.

6. A process according to any preceding claim wherein the binder is
(i) a polymeric organic binder selected from one or more of the following: polyvinyl alcohol (PVA), polyvinyl acetate, polyvinyl alcohol/acetate copolymers, polyimide, polyamide, polyvinyl pyrrolidone, polyacrylates include polyacrylic acid, polycarboxylates, polyethylene glycols, poly(1,4- phenylene-ether-ether-sulfone) (PFEES), poly(tetrahydrofuran) (PTHF), hydrophobic organic polymers including polyvinylidene fluoride, graphene, graphene oxide, fluorinated graphene, polyvinyl epoxies, polyethylene, polystyrene, polyvinylchloride, polytetrafluorethylene, polydimethylsiloxane, polyesters, polyurethanes, polylactic acid and derivatives thereof, or biopolymer-based materials such as polysaccharide gums including xantham gum and guar gum, alginates, chitosan, cellulose-based polymers including cellulose, cellulose acetate, hydroxypropyl methyl cellulose (HPMC), methyl cellulose, ethyl cellulose, hydroxyethyl cellulose, hydroxypropyl methylcellulose phthalate (HPMCP), carboxymethyl cellulose (CMC) or any mixtures and combinations thereof, preferably wherein the polymeric organic binder a blend of a cellulose-based polymer and polyvinyl alcohol, preferably the cellulose-based polymer is hydroxyethyl cellulose or methyl cellulose, or
(ii) an inorganic binder selected from one or more of the following: silicas including colloidal silica suspensions, aluminas including hydrated aluminas and aluminosilicates.

7. A process according to any preceding claim, wherein the metal-organic framework (MOF) comprises metal ions selected from the group consisting of: Zn²⁺, Zr²⁺, Cu²⁺, Al³⁺, Mn²⁺, Mg²⁺, Nb²⁺, Fe²⁺, Fe³⁺, Ti²⁺, Ti³⁺, Ti⁴⁺, Co²⁺, Cr²⁺, Ni²⁺, Ca²⁺ and mixtures and combinations thereof, preferably wherein the metal-organic framework is a Zr-containing metal-organic framework and the metal-organic framework precursor materials comprise a Zr metal salt that has been pre-reacted to form Zre metal clusters.

8. A process according to any preceding claim, wherein the undried binder mass formed in step (c) has a viscosity at 10s⁻¹ and 25 °C of from about 3.0 × 10⁵ mPa.s to about 3.0 × 10⁶ mPa.s.

9. A process according to any preceding claim, wherein
(i) the reaction solvent comprises one or more of the following: water, acetone, DMSO, C1-C4 short-chain length alcohols, C1-C4 short-chain organic acids, glycols and mixtures thereof, preferably wherein the reaction solvent comprises more than 50 wt% water, and/or
(ii) the washing solvent is selected from one or more of the following: water, acetone, DMSO, C1-C4 short-chain length alcohols, glycols, C1-C4 organic acids and mixtures thereof.

10. A process according to any preceding claim wherein the binder is partially solvated by pre-mixing with one or more solvents selected from the group consisting of: water, acetone, DMSO, short-chain length alcohols, short-chain organic acids, glycols and mixtures thereof.

11. A process according to any preceding claim, wherein the adsorbent body comprises: (i) more than about 75% metal-organic framework material by weight of the adsorbent body; and (ii) less than about 20% binder by weight of the adsorbent body.

12. A process according to any preceding claim, wherein the undried adsorbent body is subjected to a spheronisation treatment.

13. A process according to any preceding claim, wherein the metal-organic framework comprises MOF crystallites, preferably wherein the MOF crystallites have a mean particle size of from about 30 nm to about 100 nm.

14. An adsorbent body or bodies made according to the process of any preceding claim wherein the bodies have an envelope density of greater than about 0.3 g/cm³ and less than about 1.5 g/cm³.

15. The use of an adsorbent body or bodies according claim 14 for gas storage and/or purification, preferably hydrogen storage and carbon dioxide capture.
